# EUROPEAN PATENT SPECIFICATION

(11) **EP 2 995 476 B1**
(45) Date of publication and mention of the grant of the patent: **08.11.2017**
(21) Application number: 15184099.8
(22) Date of filing: 07.09.2015
(51) Int. Cl.: B60C 25/05, B60C 25/138

(54) **OPERATING HEAD FOR REMOVING AND FITTING WHEEL TYRES FOR VEHICLES**
BETRIEBSKOPF ZUM ENTFERNEN UND ANBRINGEN VON RADREIFEN FÜR FAHRZEUGE
TÊTE FONCTIONNELLE POUR PLACER ET RETIRER DES PNEUS DE VÉHICULES

(30) Priority: 12.09.2014 IT MO20140256
(43) Date of publication of application: 16.03.2016
(73) Proprietor: Giuliano Group S.p.A., 42015 Correggio (RE) (IT)
(72) Inventor: Bonacini, Maurizio, 42015 Correggio (RE) (IT)
(74) Representative: Grana, Daniele

(56) References cited:
- EP-A1- 2 319 715
- US-A- 6 125 904
- US-B1- 8 770 254

## Description

The present invention relates to an operating head for removing and fitting wheel tyres for vehicles.

It is well known that vehicle wheels generally comprise a metal rim having along its perimeter annular flanges among which the end portions, so-called "beads", of an elastic tyre are inserted in adhering abutment.

The use is currently known of machines, so-called "tyre-changing machines", suitable for removing and fitting the tyre from/onto the relative rim to run, e.g., maintenance, repair or replacement jobs.

Different types of tyre-changing machines are known, in particular, comprising an operating head having a tool which can be shifted in height and horizontally by the action of respective actuators and usable for fitting and removing the tyre onto/from the rim.

The tools of known type generally have a lower abutment portion which can be positioned in correspondence ofa stretch of the rim edge of a wheel fixed on the machine, in order to allow the tyre removal operations.

In addition, a particular type of known tools has a retractable nail with a curved end part able to grip the tyre bead.

In particular, the nail is movable, due to the action of an actuator commonly mounted on the movable arm, between a bead fastening position, wherein it extends from the operating head to be interposed between the annular flange of the rim and a stretch of the tyre to be removed, and an extraction position of the tyre edge, wherein it is raised to extract the stretch of the bead grasped above the rim annular flange.

During use, the operator adjusts the position of the operating head with respect to the frame according to the specific dimensions of the wheel, and positions the tool resting on the rim edge.

The nail is then brought to the fastening position and the end part presses the tyre flank as far as introducing itself between the tyre bead and the relative flange on the rim, so as to position the hooked extremity to retain the tyre bead. Subsequently, the nail is positioned in the extraction position so as to extract a portion of the bead above the rim.

The rotation of the rim then allows the coming out of the entyre bead from the respective flange.

The operating heads and tools of the known type generally have, however, some drawbacks.

In particular, the positioning of the lower portion of the tool on the rim edge is carried out manually by the operator who, according to his/her sensitivity, adjusts the force applied by the tool on the edge of the rim itself.

This implies therefore the need to use qualified personnel and, in any case, can result in damages to the rim during the positioning of the tool, or else subsequently, during the tyre removal job.

Document US 8 770 254 B1 discloses a tyre changer machine with a control system for monitoring a rotational position of a sensitive feature associated with a wheel rim and tyre during a tyre changing procedure.

The main aim of the present invention is to provide an operating head for removing and fitting wheel tyres for vehicles which allows to eliminate the risks of damaging the rim caused by an excessive pressure of the tool during the tyre fitting/removal operations.

Another object of the present invention is to provide an operating head for removing and fitting wheel tyres for vehicles which allows to overcome the mentioned drawbacks of the prior art within the ambit of a simple, rational, easy, effective to use and affordable solution.

The above mentioned objects are achieved by this operating head for removing and fitting wheel tyres for vehicles according to claim 1.

Other characteristics and advantages of the present invention will become better evident from the description of a preferred, but not exclusive embodiment of an operating head for removing and fitting wheel tyres for vehicles, illustrated by way of an indicative but non-limiting example, in the accompanying drawings in which:
Figure 1 is a view of the operating head according to the invention installed on a tyre-changing machine;

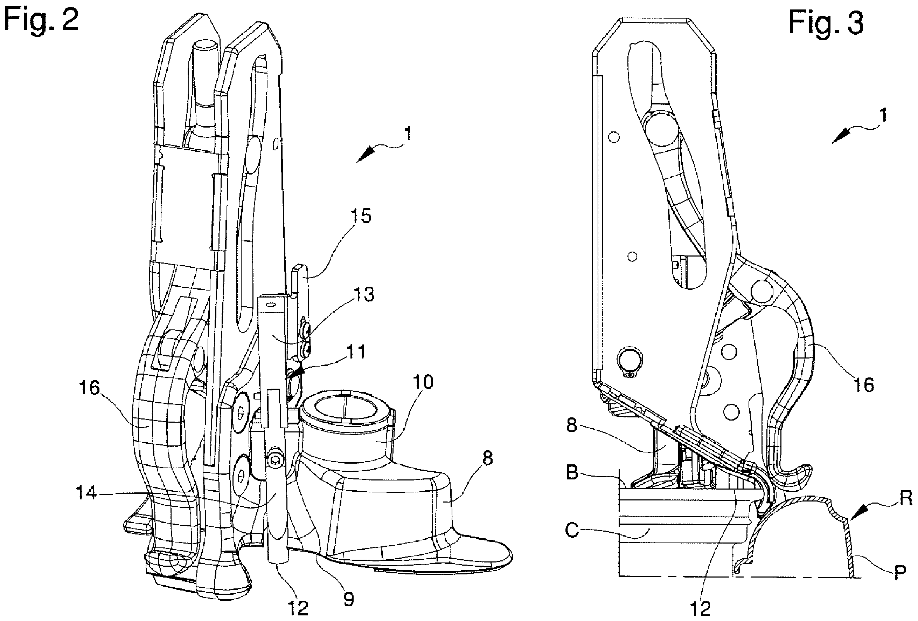

Figure 2 is an axonometric view of the operating head according to the invention;
Figure 3 is a side view illustrating the positioning of the operating head according to the invention in correspondence ofa stretch of the rim edge of a wheel.

With particular reference to such figures, reference number 1 globally indicates an operating head installable on a tyre-changing machine 2 and usable for the fitting and/or removal of a tyre P onto/from the rim C of a wheel R.

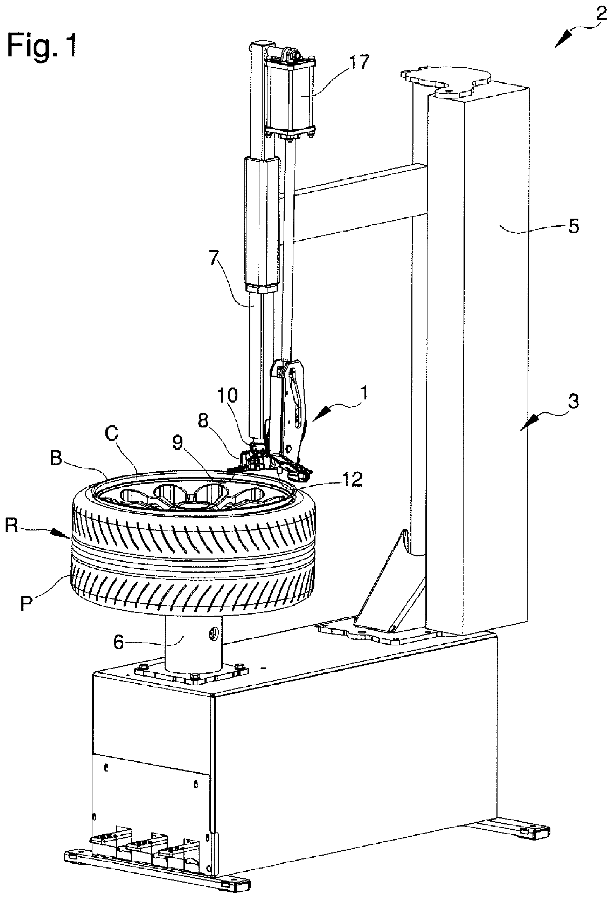

As illustrated by way of example in Figure 1, the operating head 1 can be installed on a machine 2 for the removal and fitting of wheel tyres for vehicles of a conventional type.

For example, the machine 2 may comprise a bearing structure 3, substantially made up of a base 4 resting on the ground and of an upright 5 which rises from the base itself, locking means 6 of a rim C of a wheel R supported by the base B and a tool-carrying arm 7 supported movable vertically and horizontally to the upright 5.

In particular, the operating head 1 can be fixed to the lower extremity of the tool-carrying arm 7 of the machine 2.

The operating head 1 comprising at least a fitting/removing tool 8 associable with the tool-carrying arm 7 and having an abutment portion 9 which can be positioned in correspondence ofa stretch of the edge B of the rim C of the wheel R.

In particular, the tool 8 has attachment means 10, the type of one or more threaded elements, able to allow the anchoring of the operating head 1 at the lower extremity of the tool-carrying arm 7.

Advantageously, the operating head 1 comprises a force measuring device 11 linked together with the tool 8 and having a contact portion 12 arranged substantially in correspondence of the abutment portion 9 and able to be placed in contact with the edge B of the rim C to detect the force applied on the edge B along a respective direction of detection.

In particular, the force measuring device 11 comprises a force sensor 13. Preferably, the force sensor 13 is constituted by a load cell of the type, e.g., of a shear load cell or the like.

Preferably, the force measuring device 11 also comprises at least a feeler element 14 having the contact portion 12 and associated with the force sensor 13.

In particular, the feeler element 14 has a substantially elongated conformation, extends along a direction of detection and has an extremity associated with the force sensor 13 and an opposite extremity having the contact portion 12.

With reference to the particular embodiment illustrated in the figures, the force sensor 13 is anchored to the body of tool 8 by means of at least one holding bracket 15. A different fastening of the force sensor 13 to the tool 8 cannot however be ruled out.

Different embodiments of the force measuring device 11 cannot also be ruled out in which, e.g., the contact portion 12 is made up of a portion of the tool 8 and the force sensor 13 is integrated in the tool itself.

Advantageously, the operating head 1 may comprise a plurality of force sensors 13 having respective contact portions 12 able to engage in correspondence of respective portions of the edge B of the rim C, in order to detect the forces applied on the edge B along different directions of detection.

Furthermore, the machine 2 has movement means for moving the operating head 1 along a vertical direction, not shown in the illustrations, operatively connected to the force sensor 13 and able to vary the pressure of the contact portion 12 of the operating head 1 on the edge B of the rim C depending on the force detected by the force sensor 13.

Advantageously, said movement means are able to vary the position of the operating head 1 also during the removal or fitting operations of the tyre, depending on the force variations detected by the force sensor 13.

In this way it is possible to avoid any damage to the rim due to, e.g., variations in the inclination or the conformation of the surface of the edge B of the rim C. Still with reference to the particular embodiment illustrated in the figures, the operating head 1 comprises a movable nail 16 supported by the tool 8 and having a substantially hook-shaped free extremity.

The movable nail 16 is able to be moved by the action of actuator means 17 between a fastening position, wherein it extends from the tool 8 beyond the abutment portion 9 to be inserted between the edge B of the rim C and the tyre P and to position the free extremity below the bead of the tyre P, and an extraction position, wherein the free extremity is arranged in correspondence of the abutment portion 9 to extract the bead of the tyre P above the edge B of rim C.

It has in practice been ascertained how the described invention achieves the proposed objects.

In particular the fact is underlined that the presence of the force measuring device allows to eliminate the risks of damaging the rim caused by an excessive pressure by the tool during the tyre fitting/removal operations.

## Claims

1. Operating head (1) for removing and fitting wheel tyres for vehicles, comprising at least a tool (8) for the fitting and/or removal of a tyre, associable with a tool-carrying arm (7) of a tyre-changing machine (2) and having at least an abutment portion (9) which can be positioned in correspondence of a stretch of the edge (B) of the rim (C) of a wheel (R) fixed on said tyre-changing machine (2), **characterized by** the fact that it comprises at least a force measuring device (11) linked together with said tool (8) and having a contact portion (12) arranged substantially in correspondence of said abutment portion (9) and able to be placed in contact with said edge (B) of the rim (C) to detect the force applied on said edge (B) along at least a direction of detection.

2. Operating head (1) according to claim 1, **characterized by** the fact that said force measuring device (11) comprises at least a force sensor (13).

3. Operating head (1) according to claim 2, **characterized by** the fact that said force sensor (13) comprises at least a load cell (13).

4. Operating head (1) according to one or more of the preceding claims, **characterized by** the fact that said force measuring device (11) comprises at least a feeler element (14) having said contact portion (12) and associated with said force sensor (13).

5. Operating head (1) according to claim 4, **characterized by** the fact that said feeler element (14) has a substantially elongated conformation, extends substantially along said direction of detection and has an extremity associated with said force sensor (13) and an opposite extremity having said contact portion (12).

6. Operating head (1) according to one or more of the preceding claims, **characterized by** the fact that said force measuring device (11) is anchored to said tool (8) by means of at least a holding bracket (15).

7. Operating head (1) according to one or more of claims 1 to 3, **characterized by** the fact that said contact portion (12) is made of at least a portion of said tool (8).

8. Operating head (1) according to one or more of the preceding claims, **characterized by** the fact that it comprises a plurality of said force measuring devices (11) having respective contact portions (12) able to be placed in contact with respective portions of said edge (B) of the rim (C) to detect the forces applied on said edge (B) along different directions of detection.

9. Operating head (1) according to one or more of the preceding claims, **characterized by** the fact that said tool (8) comprises attachment means (10) associable with said tool-carrying arm (7) of the tyre-changing machine (2).

10. Operating head (1) according to one or more of the preceding claims, **characterized by** the fact that it comprises at least a movable nail (16) having a substantially hook-shaped free extremity, associated with said tool (8) and movable between a fastening position, wherein said movable nail (16) extends beyond said abutment portion (9) to be inserted between said edge (B) of the rim (C) and the tyre (P) of said wheel (R) and to position said free extremity below the bead of said tyre (P), and an extraction position, wherein said free extremity is arranged in correspondence of said abutment portion (9) to extract said bead of the tyre (P) above said edge (B) of the rim (C).

11. Machine (2) for removing and fitting wheel tyres for vehicles, comprising at least a bearing structure (3), locking means (6) of a rim (C) of a wheel (R) for vehicles and at least a tool-carrying arm (7) associated movable with said bearing structure (3), **characterized by** the fact that said tool-carrying arm (7) has at least an operating head (1) according to one or more of the preceding claims.

12. Machine (2) according to claim 11, **characterized by** the fact that it comprises movement means for moving said operating head (1) operatively connected to said force measuring device (11) and able to vary the pressure of said contact portion (12) of the operating head (1) on said edge (B) of the rim (C) depending on the force detected by said force measuring device (11).

## Patentansprüche

1. Betriebskopf (1) zum Entfernen und Anbringen von Radreifen für Fahrzeuge, umfassend mindestens ein Werkzeug (8) zum Anbringen und/oder Entfernen eines Reifens, das mit einem werkzeugtragenden Arm (7) einer Reifenwechselmaschine (2) assoziierbar und mindestens einen Widerlagerteil (9) aufweist, der entsprechend einer Länge des Randes (B) der Felge (C) eines Rades (R), das auf der Reifenwechselmaschine (2) fixiert ist, positioniert werden kann, durch die Tatsache gekennzeichnet, dass er mindestens eine Kraftmessungsvorrichtung (11) umfasst, die mit dem Werkzeug (8) verbunden ist und einen Kontaktabschnitt (12) aufweist, der im Wesentlichen entsprechend zu dem Widerlagerteil (9) angeordnet ist und dazu in der Lage ist, in Kontakt mit dem Rand (B) der Felge (C) gebracht zu werden, um die Kraft, die auf den Rand (B) entlang mindestens einer Erfassungsrichtung angewendet wird, zu erfassen.

2. Betriebskopf (1) nach Anspruch 1, durch die Tatsache gekennzeichnet, dass die Kraftmessungsvorrichtung (11) mindestens einen Kraftsensor (13) umfasst.

3. Betriebskopf (1) nach Anspruch 2, durch die Tatsache gekennzeichnet, dass der Kraftsensor (13) mindestens eine Kraftmesszelle (13) umfasst.

4. Betriebskopf (1) nach einem oder mehreren der vorstehenden Ansprüche, durch die Tatsache gekennzeichnet, dass die Kraftmessungsvorrichtung (11) mindestens ein Fühlerelement (14) umfasst, das den Kontaktabschnitt (12) aufweist und dem Kraftsensor (13) zugeordnet ist.

5. Betriebskopf (1) nach Anspruch 4, durch die Tatsache gekennzeichnet, dass das Fühlerelement (14) eine im Wesentlichen gestreckte Konformation aufweist, sich im Wesentlichen entlang der Erfassungsrichtung erstreckt und eine Extremität aufweist, die dem Kraftsensor (13) zugeordnet ist, und eine gegenüberliegende Extremität, die den Kontaktabschnitt (12) aufweist.

6. Betriebskopf (1) nach einem oder mehreren der vorstehenden Ansprüche, durch die Tatsache gekennzeichnet, dass die Kraftmessungsvorrichtung (11) mit dem Werkzeug (8) mit Hilfe von mindestens einer Halteklammer (15) verankert ist.

7. Betriebskopf (1) nach einem oder mehreren der Ansprüche 1 bis 3, durch die Tatsache gekennzeichnet, dass der Kontaktabschnitt (12) aus mindestens einem Abschnitt des Werkzeugs (8) gefertigt ist.

8. Betriebskopf (1) nach einem oder mehreren der vorstehenden Ansprüche, durch die Tatsache gekennzeichnet, dass er mehrere der Kraftmessungsvorrichtungen (11) umfasst, die jeweils Kontaktabschnitte (12) aufweisen, die sich in Kontakt mit jeweiligen Abschnitten des Rands (B) der Felge (C) in Kontakt bringen lassen, um die Kräfte zu erfassen, die auf den Rand (B) entlang unterschiedlicher Erfassungsrichtungen angewendet werden.

9. Betriebskopf (1) nach einem oder mehreren der vorstehenden Ansprüche, durch die Tatsache gekennzeichnet, dass das Werkzeug (8) Befestigungsmittel (10) umfasst, die mit dem werkzeugtragenden Arm (7) der Reifenwechselmaschine (2) assoziierbar sind.

10. Betriebskopf (1) nach einem oder mehreren der vorstehenden Ansprüche, durch die Tatsache gekennzeichnet, dass er mindestens einen bewegbaren Nagel (16) umfasst, der eine im Wesentlichen hakenförmige, freie Extremität aufweist, die dem Werkzeug (8) zugeordnet ist und zwischen einer Befestigungsposition, in der der bewegbare Nagel (16) sich über den Widerlagerteil (9) hinaus erstreckt, der zwischen den Rand (B) und der Felge (C) und dem Reifen (P) des Rades(R) und zum Positionieren der freien Extremität unter der Wulst des Reifens (P) einzuführen ist, und einer Extraktionsposition erstreckt, worin die freie Extremität entsprechend in Korrespondenz zu dem Widerlagerteil (9) angeordnet wird, um die Wulst des Reifens (P) über den Rand (B) der Felge (C) zu extrahieren.

11. Maschine (2) um Entfernen und Anbringen von Radreifen für Fahrzeuge, umfassend mindestens eine Tragekonstruktion (3), Verriegelungsmittel (6) einer Felge (C) eines Rades (R) für Fahrzeuge und mindestens einen werkzeugtragenden Arm (7), der bewegbar der Tragekonstruktion (3) zugeordnet ist, durch die Tatsache gekennzeichnet, dass der werkzeugtragende Arm (7) mindestens einen Betriebskopf (1) nach einem oder mehreren der vorstehenden Ansprüche aufweist.

12. Maschine (2) nach Anspruch 11, durch die Tatsache gekennzeichnet, dass sie Bewegungsmittel zum Bewegen des Betriebskopfes (1) aufweist, die operativ mit der Kraftmessungsvorrichtung (11) verbunden sind und dazu in der Lage sind, den Druck des Kontaktabschnitts (12) des Betriebskopfes (1) auf den Rand (B) der Felge (C) in Abhängigkeit von der Kraft, die von der Kraftmessungsvorrichtung (11) erfasst wurde, zu variieren.

## Revendications

1. Tête d'exploitation (1) pour démonter et monter des pneus de roue de véhicules, comprenant au moins un outil (8) pour le montage et/ou le démontage d'un pneu, pouvant être associé à un bras porte-outil (7) d'une machine à changer les pneus (2) et ayant au moins une portion de butée (9) qui peut être positionnée en correspondance d'un étirement du bord (B) de la jante (C) d'une roue (R) fixée sur ladite machine à changer les pneus (2), **caractérisée par le fait qu'**elle comprend au moins un dispositif de mesure de force (11) relié avec ledit outil (8) et ayant une portion de contact (12) agencée sensiblement en correspondance de ladite portion de butée (9) et apte à être placée en contact avec ledit bord (B) de la jante (C) pour détecter la force appliquée sur ledit bord (B) le long d'au moins une direction de détection.

2. Tête d'exploitation (1) selon la revendication 1, **caractérisée par le fait que** ledit dispositif de mesure de force (11) comprend au moins un capteur de force (13).

3. Tête d'exploitation (1) selon la revendication 2, **caractérisée par le fait que** ledit capteur de force (13) comprend au moins une cellule de charge (13).

4. Tête d'exploitation (1) selon une ou plusieurs des revendications précédentes, **caractérisée par le fait que** ledit dispositif de mesure de force (11) comprend au moins un élément palpeur (14) ayant ladite portion de contact (12) et associé audit capteur de force (13).

5. Tête d'exploitation (1) selon la revendication 4, **caractérisée par le fait que** ledit élément palpeur (14) a une conformation sensiblement allongée, s'étend sensiblement le long de ladite direction de détection et a une extrémité associée audit capteur de force (13) et une extrémité opposée ayant ladite portion de contact (12).

6. Tête d'exploitation (1) selon une ou plusieurs des revendications précédentes, **caractérisée par le fait que** ledit dispositif de mesure de force (11) est ancré sur ledit outil (8) au moyen d'au moins une console de tenue (15).

7. Tête d'exploitation (1) selon une ou plusieurs des revendications 1 à 3, **caractérisée par le fait que** ladite portion de contact (12) est constituée d'au moins une portion dudit outil (8).

8. Tête d'exploitation (1) selon une ou plusieurs des revendications précédentes, **caractérisée par le fait qu'**elle comprend une pluralité desdits dispositifs de mesure de force (11) ayant des portions de contact (12) respectives aptes à être placées en contact avec des portions respectives dudit bord (B) de la jante (C) pour détecter les forces appliquées sur ledit bord (B) le long de directions de détection différentes.

9. Tête d'exploitation (1) selon une ou plusieurs des revendications précédentes, **caractérisée par le fait que** ledit outil (8) comprend des moyens d'attache (10) pouvant être associés audit bras porte-outil (7) de la machine à changer les pneus (2).

10. Tête d'exploitation (1) selon une ou plusieurs des revendications précédentes, **caractérisée par le fait qu'**elle comprend au moins un clou mobile (16) ayant une extrémité libre sensiblement en forme de crochet, associé audit outil (8) et mobile entre une position d'arrimage, dans laquelle ledit clou mobile (16) s'étend au-delà de ladite portion de butée (9) pour être inséré entre ledit bord (B) de la jante (C) et le pneu (P) de ladite roue (R) et pour positionner ladite extrémité libre en dessous du talon dudit pneu (P), et une position d'extraction, dans laquelle ladite extrémité libre est agencée en correspondance de ladite portion de butée (9) pour extraire ledit talon du pneu (P) au-dessus dudit bord (B) de la jante (C).

11. Machine (2) pour démonter et monter des pneus de roue de véhicules, comprenant au moins une structure portante (3), des moyens de verrouillage (6) d'une jante (C) d'une roue (R) de véhicules et au moins un bras porte-outil (7) associé, mobile avec ladite structure portante (3), **caractérisée par le fait que** ledit bras porte-outil (7) comporte au moins une tête d'exploitation (1) selon une ou plusieurs des revendications précédentes.

12. Machine (2) selon la revendication 11, **caractérisée par le fait qu'**elle comprend un moyen de déplacement pour déplacer la tête d'exploitation (1) raccordée en exploitation audit dispositif de mesure de force (11) et apte à faire varier la pression de ladite portion de contact (12) de la tête d'exploitation (1) sur ledit bord (B) de la jante (C) en fonction de la force détectée par ledit dispositif de mesure de force (11).
